# FASCICULE DE BREVET EUROPEEN

(11) **EP 1 952 088 B1**
(45) Date de publication et mention de la délivrance du brevet: **07.07.2010**
(21) Numéro de dépôt: 06831139.8
(22) Date de dépôt: 20.11.2006
(51) Int. Cl.: G01B 5/20, B24B 9/14

(54) **PROCEDE DE LECTURE DE CONTOUR DE DRAGEOIR DE CERCLE DE MONTURE DE LUNETTES**
VERFAHREN ZUM SCANNEN DER RANDRILLENKONTUR EINES BRILLENRAHMENS
METHOD FOR SCANNING RIM GROOVE CONTOUR OF SPECTACLE FRAME

(30) Priorité: 23.11.2005 FR 0511842
(43) Date de publication de la demande: 06.08.2008
(73) Titulaire: ESSILOR INTERNATIONAL (Compagnie Générale d'Optique), 94227 Charenton (FR)
(72) Inventeur: JOUARD, Ludovic, F-94227 Charenton (FR)
(74) Mandataire: Chauvin, Vincent
(86) Numéro de dépôt international: PCT/FR2006/002545
(87) Numéro de publication internationale: WO 2007/060315

(56) Documents cités:
- EP-A- 0 689 900
- EP-A- 0 819 967
- EP-A- 1 037 008
- DE-A1- 3 933 940
- DE-A1- 10 135 649
- FR-A- 2 777 817
- INTERNET CITATION: 'Neostyle Sunart 55 Saphira H07', [en ligne] 02 Novembre 2009, Extrait de l'Internet: <URL:http://www.optiking.de/start/index.php ?page=home> [extrait le 2009-11-02]

## Description

### DOMAINE TECHNIQUE AUQUEL SE RAPPORTE L'INVENTION

La présente invention concerne de manière générale la mesure dimensionnelle intervenant dans la fabrication d'une paire de lunettes adaptée à un porteur particulier.

Elle concerne plus particulièrement un procédé de lecture de contour d'un drageoir de cercle d'une monture de lunettes tel que défini dans la partie préambule de la revendication 1.

L'invention trouve une application particulièrement avantageuse par son application aux lunettes comportant des montures fortement galbées.

### ARRIERE-PLAN TECHNOLOGIQUE

La partie technique du métier de l'opticien consiste à monter une paire de lentilles ophtalmiques sur une monture sélectionnée par un porteur. Ce montage se décompose en cinq opérations principales :
- la lecture du contour des drageoirs des cercles de la monture sélectionnée par le porteur, c'est-à-dire du contour des rainures qui parcourent l'intérieur de chaque cercle de la monture,
- le centrage de chaque lentille qui consiste à déterminer la position qu'occupera chaque lentille sur la monture afin d'être convenablement centrée en regard de l'oeil du porteur,
- le palpage de chaque lentille qui consiste à déterminer les coordonnées des points caractérisant la géométrie du contour souhaité des lentilles, puis,
- le détourage de chaque lentille qui consiste à usiner ou à découper son contour à la forme souhaitée, compte tenu des paramètres de centrage définis, et enfin,
- le biseautage qui consiste à réaliser un biseau destiné à maintenir la lentille dans le drageoir que comporte la monture.

Dans le cadre de la présente invention, on s'intéresse à la première opération de lecture du contour des drageoirs des cercles de la monture. Il s'agit concrètement, pour l'opticien, de palper le contour intérieur des cercles de la monture des lunettes sélectionnées afin de déterminer précisément les coordonnées de points caractérisant le contour du fond du drageoir. La connaissance de ce contour permet à l'opticien de déduire la forme que devront présenter les lentilles une fois détourées et biseautées afin de pouvoir être montées sur cette monture.

L'opticien utilise généralement, afin de réaliser cette opération, un appareil de lecture de contour de drageoir tel que celui décrit dans le document EP 0819967.

Cet appareil comporte un palpeur qui est apte à pivoter autour d'un axe de rotation normal au plan moyen de la monture et qui comprend un doigt de palpage pointant selon un axe orthogonal à cet axe de rotation. Le doigt de palpage comporte en particulier une extrémité apte à s'insérer dans le drageoir afin de déterminer les coordonnées spatiales du contour du drageoir.

L'objectif de cette opération est en particulier de suivre très exactement le fond du drageoir que comporte le cercle à lire de manière à pouvoir mémoriser une image numérique précise de la géométrie du drageoir.

La demanderesse a constaté que pour certaines formes et tailles de montures, en particulier pour les montures fortement galbées (c'est-à-dire présentant une courbure importante), les procédés de lecture connus ne donnent pas entière satisfaction ce qui peut impliquer des difficultés de montage des lentilles sur ce type de montures.

En l'espèce, la demanderesse s'est aperçue que l'erreur de lecture du drageoir provenait du fait que, sous certaines conditions, l'embout de lecture du doigt de palpage ne pouvait pas atteindre le fond du drageoir.

En effet, lorsque la monture d'une paire de lunettes présente une courbure importante (on dit que la monture est fortement galbée), souvent pour des raisons esthétiques, le drageoir présente lui aussi une courbure importante. Par ailleurs, cette courbure est généralement associée à un vrillage du drageoir. On dit dans ce cas que le drageoir de la monture des lunettes est localement « versé ».

C'est pourquoi, lors de la lecture du contour d'un drageoir d'un cercle de telles lunettes, l'axe de palpage étant parallèle au plan général de la monture, le doigt de palpage entre en contact avec le bord du drageoir à lire. Ce conflit mécanique du doigt de palpage avec le bord du drageoir empêche par conséquent l'extrémité du doigt de palpage d'atteindre le fond du drageoir. L'extrémité du doigt de palpage glisse donc le long d'une surface latérale du drageoir. Or on souhaite acquérir la géométrie du fond du drageoir. Ce glissement fausse donc la lecture du fond du drageoir.

On connaît alors du document EP 1 037 008 un appareil de lecture de contour de drageoir dont le palpeur est monté non seulement à pivotement autour d'un axe de pivotement pour glisser le long de l'ensemble du drageoir de chaque cercle de la monture, mais en outre à basculement autour d'un axe de basculement orthogonal à l'axe de pivotement pour permettre au palpeur de basculer afin de se rapprocher du drageoir.

Cet axe de basculement est décalé par rapport à l'axe de pivotement d'un entr'axe donné, ce qui permet au palpeur de pointer vers le côté arrière de la monture lorsque le point palpé du drageoir s'étend à une distance de l'axe de pivotement inférieure à cet entr'axe. Ainsi, lorsque le palpeur palpe une monture de lunettes dont le drageoir est fortement versé, l'inclinaison du palpeur permet à l'extrémité du doigt de palpage d'atteindre le fond du drageoir.

L'inconvénient de ce dispositif est que pour une monture de lunettes de dimensions importantes, lorsque le point palpé du drageoir s'étend à une distance de l'axe de pivotement supérieur audit entr'axe, le palpeur s'incline vers le côté avant de la monture de lunettes ce qui ne lui permet plus d'atteindre le fond du drageoir, provoquant ainsi une erreur de lecture.

### OBJET DE L'INVENTION

Le but de la présente invention est de proposer un procédé de lecture de contour non seulement plus précis mais également plus polyvalent, c'est-à-dire adapté à la lecture d'un plus grand nombre de formes et de tailles de montures.

Plus particulièrement, on propose selon l'invention un procédé de lecture de contour de drageoir tel que défini dans la revendication 1.

Ainsi, grâce à l'invention, l'extrémité du doigt de palpage du palpeur reste constamment en contact avec le fond du drageoir.

L'inclinaison bien choisie du doigt de palpage permet en effet de remédier au problème précité puisque, lorsque la monture est fortement versée et présente des dimensions importantes, le palpeur n'interagit plus avec le bord du drageoir à lire, permettant à son extrémité de palper le fond du drageoir.

D'autres caractéristiques avantageuses et non limitatives de l'invention sont définies dans les revendications 2 à 25.

Selon l'une de ces caractéristiques, durant l'étape de palpage, le palpeur pointe obliquement au moins une fois vers le cercle de la monture et vers son côté arrière avec un angle de palpage supérieur ou égal à 5 degrés.

Ainsi, d'une part, le palpeur est adapté à être suffisamment incliné au moins dans la zone du cercle (la zone temporale) qui est la plus courbée par rapport au plan général (confondu avec le plan général de la monture), et, d'autre part, il est adapté à ne pas être trop incliné de manière à pouvoir également lire le cercle dans les zones qui ne sont pas ou peu courbées par rapport au plan général de la monture (zone nasale). Par conséquent, l'angle de palpage présenté par le palpeur prévient toute interférence mécanique entre le palpeur et le cercle de la monture, quelle que soit la zone du cercle qui est lue.

Selon une autre de ces caractéristiques, l'étape de palpage est réalisée en faisant glisser au fond du drageoir du cercle de la monture de lunettes un embout de lecture sensiblement sphérique d'une extrémité terminale du doigt de palpage et, l'extrémité terminale du doigt de palpage présente une épaisseur inférieure au diamètre de l'embout de lecture.

Ainsi, l'embout de lecture s'insère plus aisément dans le drageoir de la monture, cette faible dimension dé l'extrémité terminale du palpeur participant à la prévention de toute interférence mécanique du palpeur avec le cercle de la monture.

Selon une autre de ces caractéristiques l'angle de palpage est fixe et est compris entre 10 et 20 degrés, de préférence 15 degrés.

Ainsi, une telle valeur de l'angle de palpage permet aussi bien de lire le cercle d'une monture dans une zone très inclinée que dans une zone qui n'est pas inclinée. Cette valeur permet également de lire le contour des drageoirs des cercles de montures peu galbées.

Selon une autre de ces caractéristiques, le doigt de palpage est amovible.

Ainsi, si le doigt de palpage se brise ou s'abîme, il est possible de le changer aisément. Il peut également être changé par un doigt de palpage dont l'angle de palpage est différent et est plus adapté à la monture de lunettes à palper.

Selon une autre de ces caractéristiques , le palpeur comporte au moins deux doigts de palpage interchangeables présentant, une fois montés, des angles de palpage différents.

Ainsi, lorsque l'opticien détecte visuellement que la monture à lire est très galbée, il peut échanger le doigt de palpage initialement monté sur le palpeur par un doigt de palpage plus adapté au galbe de la monture à lire.

Selon une autre de ces caractéristiques , le palpeur comporte plusieurs doigts de palpage sélectivement activables.

Ainsi, le changement d'un doigt de palpage par un autre doigt de palpage peut être réalisé automatiquement sans intervention manuelle de l'opticien. En outre, après un premier palpage du cercle de la monture, si on détecte une erreur de lecture de contour, on peut éventuellement effectuer un second palpage du cercle de la monture en ayant automatiquement changé de doigt de palpage.

Selon un deuxième mode de réalisation de l'invention, on fait varier l'angle de palpage pendant l'étape de palpage, de telle sorte que l'angle de palpage est maximum lorsque le palpeur palpe la zone temporale du cercle de la monture et minimum lorsque le palpeur palpe la zone nasale du cercle de la monture.

Ainsi, l'angle de palpage peut varier lors de la lecture d'un cercle de manière à s'adapter précisément et automatiquement à la forme des cercles de la monture de lunettes à lire.

Selon une caractéristique de ce mode de réalisation de l'invention, le palpeur comportant plusieurs doigts de palpage sélectivement activables, il est prévu d'activer successivement au moins deux doigts de palpage distincts pendant l'étape de palpage.

Ainsi, afin de s'adapter à la forme de la monture, le doigt de palpage initialement actif peut être changé en cours de lecture par un doigt plus adapté à la cambrure de la zone en cours de lecture par le palpeur.

Selon une autre caractéristique de ce mode de réalisation de l'invention, il est prévu, pendant l'étape de palpage, de faire varier continûment l'angle de palpage en fonction de la position spatiale du doigt de palpage.

Ainsi, afin de s'adapter à la forme de la monture, le doigt de palpage peut varier en continue de manière à s'adapter automatiquement et très précisément à la courbure de la zone en cours de lecture par le palpeur. Il est par conséquent possible d'adapter en temps réel l'orientation du doigt de palpage à l'orientation du drageoir du cercle à lire. Toute possibilité d'interférence du doigt de palpage avec le cercle à lire est par conséquent écartée.

Selon l'une des caractéristiques de l'invention, le palpeur étant monté à pivotement autour d'un axe porteur parallèle à l'axe de rotation, le doigt ou la palette de palpage pointe vers l'extérieur du cercle décrit par le palpeur en rotation autour de l'axe porteur, avec un angle non nul par rapport à sa direction orthoradiale autour de cet axe porteur. Avantageusement, le doigt ou la palette de palpage pointe vers l'extérieur du cercle décrit par le palpeur autour de l'axe porteur avec un angle compris entre 10 et 20 degrés, de préférence 15 degrés, par rapport à sa direction orthoradiale autour de cet axe porteur.

Ainsi, même si le doigt de palpage ne pointe pas dans une direction radiale par rapport à l'axe porteur, le doigt de palpage se présente globalement perpendiculairement à la direction tangente au contour du drageoir, en projection dans un plan orthogonal à l'axe porteur.

Avantageusement, le déplacement du palpeur est effectué par des moyens de motorisation pilotés par des moyens électroniques et/ou informatiques de telle sorte que le doigt de palpage ou la palette de palpage reste constamment au contact du fond du drageoir.

Avantageusement, la monture de lunettes est fortement galbée et présente, entre son plan général et un axe qui passe par deux points du drageoir et qui présente la plus grande inclinaison par rapport au plan général, un angle de galbe supérieur à 20 degrés.

### DESCRIPTION DETAILLEE D'UN EXEMPLE DE REALISATION

La description qui va suivre en regard des dessins annexés donnés à titre d'exemples non limitatifs, fera bien comprendre en quoi consiste l'invention et comment elle peut être réalisée.

Sur les dessins annexés :
- la figure 1 est une vue en perspective d'un premier mode de réalisation d'un appareil de lecture de contour recevant une monture de lunettes dont la forme des cercles est destinée à être relevée par un palpeur ;
- les figures 2 et 3 sont des vues en perspective du dessous du plateau tournant extrait de l'appareil de la figure 1, ces figures 2 et 3 permettant de voir selon deux angles différents le sous-ensemble de lecture porté par le plateau tournant ;
- les figures 4A et 4B sont des vues en plan de côté et de dessus du palpeur ;
- la figure 5 est une vue en coupe des cercles dont la forme est relevée par le palpeur ;
- la figure 6 est une vue de dessus de la monture de lunettes permettant d'observer la cambrure de chacun des cercles ;
- les figures 7A et 7B sont des vues en coupe du drageoir d'un des deux cercles en deux points distincts du contour du cercle ;
- la figure 8 une vue en plan de côté du palpeur selon une première variante de réalisation de l'invention ;
- la figure 9A est une vue en plan de côté d'un palpeur selon un deuxième mode de réalisation de l'invention ; et
- la figure 9B est une vue en perspective du dessous du plateau tournant extrait de l'appareil de la figure 1 portant un palpeur selon une variante du deuxième mode de réalisation de l'invention.

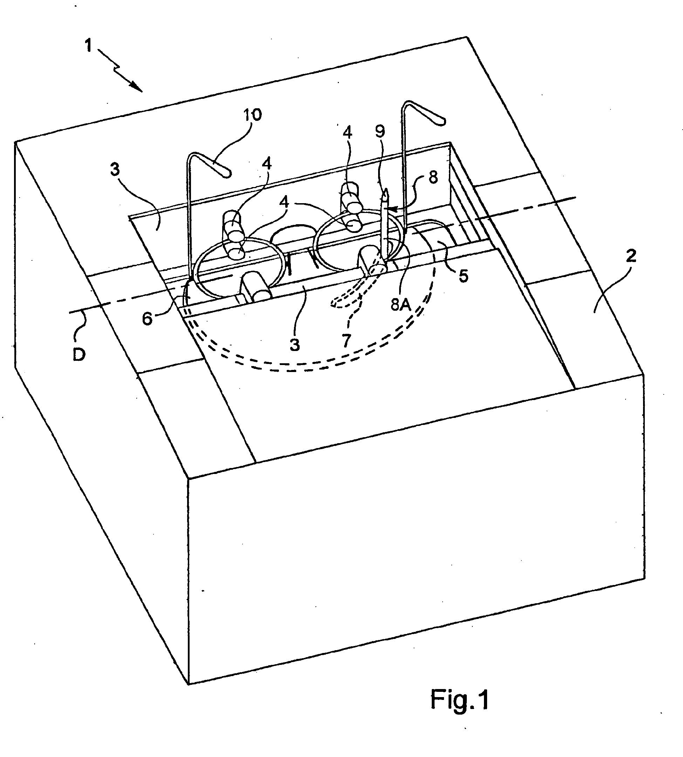

La figure 1 est une vue générale d'un premier mode de réalisation d'un appareil de lecture de contour 1 tel qu'il se présente à son utilisateur. Cet appareil comporte un capot supérieur 2 recouvrant l'ensemble de l'appareil à l'exception d'une portion supérieure centrale.

L'appareil de lecture de contour 1 comporte également un jeu de deux mâchoires 3 dont au moins une des mâchoires 3 est mobile par rapport à l'autre de sorte que les mâchoires 3 peuvent être rapprochées ou écartées l'une de l'autre pour former un dispositif de serrage. Chacune des mâchoires 3 est de plus munie de deux pinces formées chacune de deux plots 4 mobiles pour être adaptés à serrer entre eux une monture 10 de lunettes. La monture 10 peut alors être maintenue immobile sur l'appareil de lecture de contour 1. Les points de contact entre les plots 4 d'une même pince définissent un plan général K correspondant au plan général des montures 10 lorsque ces dernières sont disposées dans l'appareil de lecture de contour 1.

On entend par plan général K de la monture 10 le plan qui est normal au plan de symétrie de la monture 10 et qui passe par les points d'appui de la monture sur les plots 4.

Dans l'espace laissé visible par l'ouverture supérieure centrale du capot 2, un châssis 5 est visible. Une platine (non visible) peut se déplacer en translation sur ce châssis 5 selon un axe de transfert D. Sur cette platine est monté tournant un plateau tournant 6. Ce plateau tournant 6 est donc apte à prendre deux positions sur l'axe de transfert D, une première position dans laquelle le centre du plateau tournant 6 est disposé entre les deux paires de plots 4 fixant le cercle correspondant à l'oeil droit de la monture 10, et une seconde position dans laquelle le centre du plateau tournant 6 est disposé entre les deux paires de plots 4 fixant le cercle correspondant à l'oeil gauche de la monture 10.

Le plateau tournant 6 possède un axe de rotation B défini comme l'axe normal à la face avant de ce plateau tournant 6 et passant par son centre. La position de cet axe par rapport à la monture 10 est par conséquent indépendante de la plus grande dimension hors tout de la monture 10.

Le plateau tournant 6 comporte par ailleurs une lumière 7 oblongue en forme d'arc de cercle à travers laquelle saille un palpeur 8 comportant une tige support 8A et, à son extrémité, un doigt de palpage 9 pourvu d'un embout de lecture 9C destiné à suivre par contact le contour de la monture 10 palpée.

Le plateau tournant 6 est guidé en rotation autour de son axe de rotation B par trois galets de guidage (non représentés) disposés régulièrement le long de sa périphérie et maintenus sur la platine de l'appareil de lecture de contour 1. Alternativement, ces galets sont commandés par un moteur-codeur (non représenté) permettant une rotation pilotée du plateau tournant 6 et un relevé de sa position angulaire T à tout instant.

On constate que, dans cet exemple, la lumière 7 en arc de cercle présente une longueur correspondant approximativement au rayon du plateau tournant 6 et s'étend entre le centre du plateau tournant 6 et sa périphérie. L'arc de cercle décrit par la lumière 7 est centré autour d'un axe porteur A.

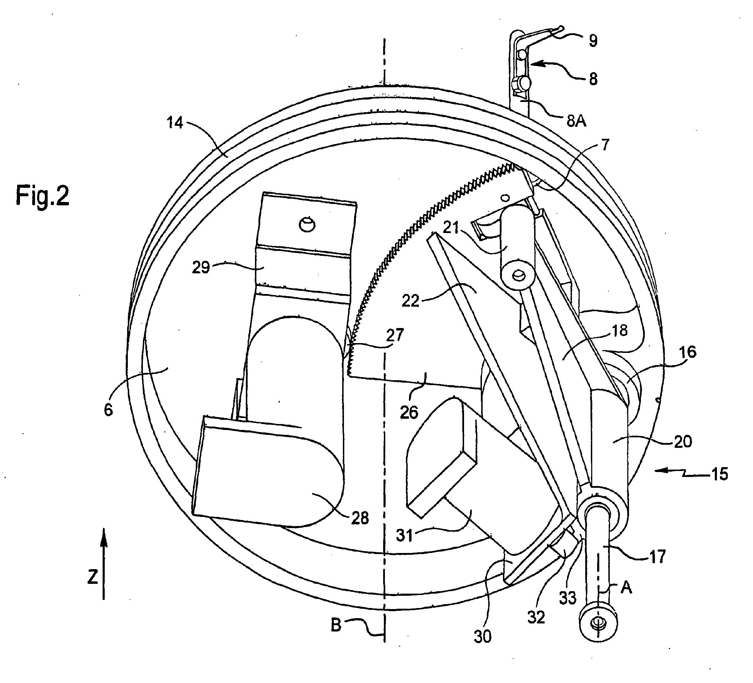

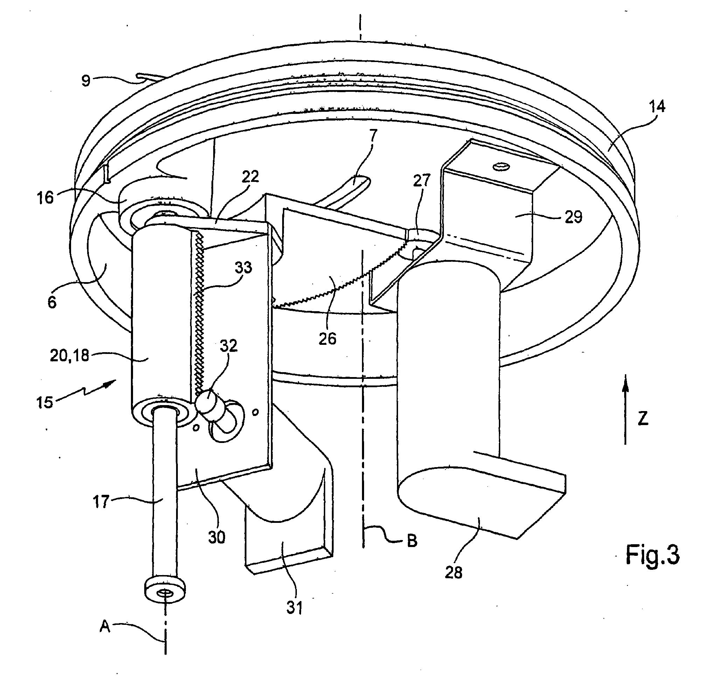

Après démontage de l'appareil 1, le plateau tournant 6 peut être extrait du châssis 5. Il se présente alors tel que représenté sur les figures 2 et 3. La vue en perspective de la figure 2 fait apparaître une rainure 14 disposée sur la tranche du plateau tournant 6, sur toute sa circonférence. Cette rainure 14 coopère avec les galets de guidage de la platine. Le plateau tournant 6 porte un sous-ensemble de lecture 15. Les figures 2 et 3 permettent de voir le sous-ensemble de lecture 15 selon deux angles de vue différents. Le sous-ensemble de lecture 15 comporte un palier 16 sur lequel est monté un arbre porteur 17 monté en rotation sur le plateau tournant 6. Cet arbre porteur 17 possède comme axe l'axe porteur A.

En référence à la figure 2, un bras porteur 18 est monté sur l'arbre porteur 17. Le bras porteur 18 comporte à l'une de ses extrémités une bague 20 permettant au bras porteur 18 un mouvement de rotation autour de l'axe porteur A ainsi qu'un mouvement de translation le long de cet axe. À son extrémité opposée à la bague 20, le bras porteur 18 comporte un support cylindrique 21 sur lequel est fixée la tige support 8A du palpeur 8 de manière à ce que l'axe de cette tige support 8A reste parallèle à l'axe porteur A.

Ce montage permet au palpeur 8 de présenter un mouvement en arc de cercle le long de la lumière 7, dans un plan orthogonal à l'axe de rotation B du plateau tournant 6, cet axe de rotation B étant ici parallèle à l'axe A. De plus, le palpeur 8 peut effectuer un mouvement d'entrée/sortie par rapport à la face avant du plateau tournant 6, lorsque le bras porteur 18 coulisse le long de l'axe A.

Le sous-ensemble de lecture 15 comporte également un bras de guidage 22 rattaché à la base de l'arbre 17. Ce bras de guidage 22 a une longueur suffisante pour atteindre la lumière 7. Le bras de guidage 22 comporte une portion semi-circulaire dentée 26 centrée sur l'axe porteur A. Les dents de la portion semi-circulaire 26 engrènent avec un pignon intermédiaire 27 qui engrène lui-même avec le pignon (non visible) d'un moteur-codeur 28 monté sur une chape 29 qui est fixée sur le plateau tournant 6. Les dents du pignon intermédiaire 27 n'ont pas été représentées pour rendre les dessins plus clairs. Le bras de guidage 22 comporte une chape verticale 30, disposée parallèlement à l'axe porteur A, sur laquelle est fixé un moteur-codeur 31 dont le pignon 32 engrène avec une crémaillère 33 fixée sur la bague 20 du bras porteur 18. La crémaillère 33 est disposée parallèlement à l'axe porteur A. Les dents du pignon 32 n'ont pas été représentées pour les mêmes raisons de clarté que précédemment.

Le moteur-codeur 28 est donc apte à faire pivoter le palpeur 8 autour de l'axe porteur A. Il permet donc d'exercer un effort transversal Ft sur le palpeur 8 selon un axe d'effort E. Cet axe d'effort E est défini comme étant l'axe passant par l'axe de la tige support 8A et tangent à l'arc de cercle décrit par la lumière 7.

Le moteur-codeur 31 est quant à lui apte à translater le palpeur selon un axe parallèle à l'axe porteur A. Il exerce donc un couple dit de compensation de masse Cz permettant d'exercer un effort axial Fa sur le palpeur 8 selon un axe parallèle à l'axe porteur A.

Ces deux efforts axial Fa et transversal Ft permettent de créer un effort global F sur le palpeur. L'effort axial Fa correspond donc à la composante axiale de l'effort global F et l'effort transversal Ft correspond à la composante transversale de l'effort global F.

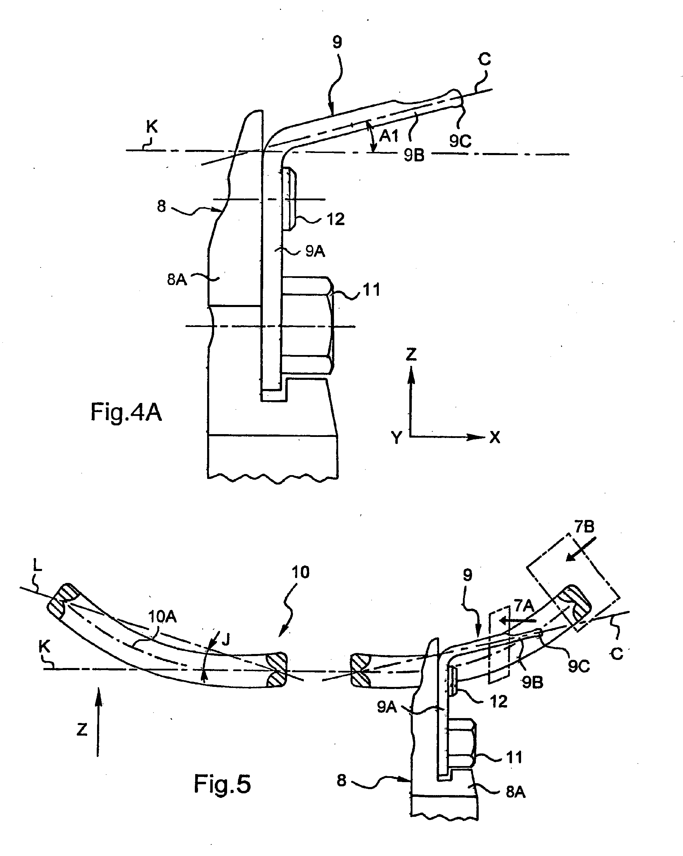

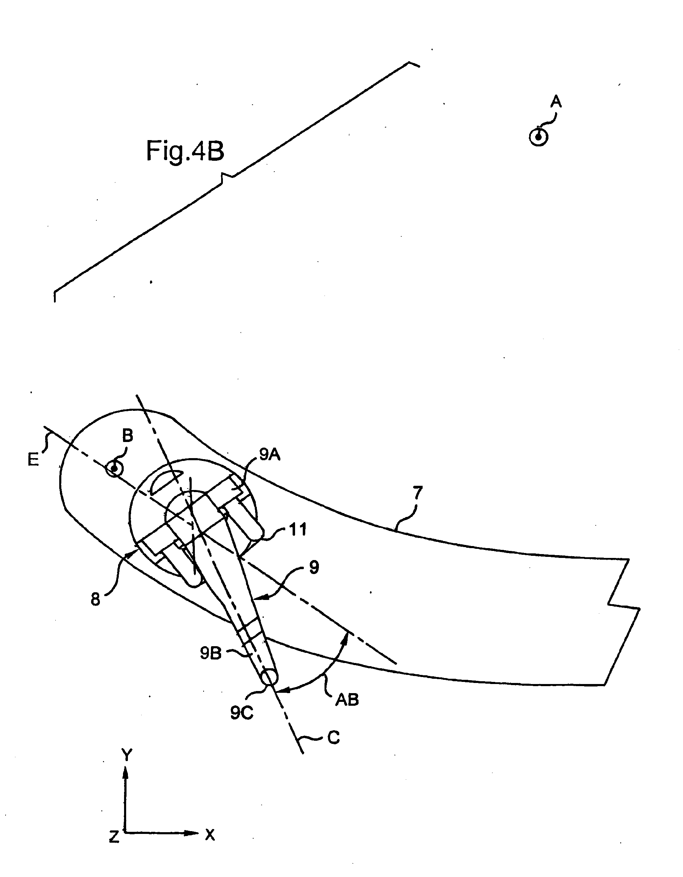

Les figures 4A et 4B représentent l'extrémité supérieure du palpeur 8 comportant le doigt de palpage 9. Ce doigt de palpage 9 comprend deux extrémités fonctionnelles. Il comprend tout d'abord, sur une première extrémité, un support 9A de forme sensiblement parallélépipédique. Ce support 9A permet de fixer le doigt de palpage 9 à la tige support 8A du palpeur 8 par l'intermédiaire de moyens de fixation 11,12. Ces moyens de fixation 11,12 comprennent ici un plot de centrage 12 et une vis coopérant avec un trou fileté percé dans la tige support 8A. Le doigt de palpage 9 est par conséquent amovible.

D'autre part, le doigt de palpage 9 est pourvu sur sa deuxième extrémité, l'extrémité terminale 9B, d'un embout de lecture 9C sensiblement sphérique destiné à coopérer avec le fond du drageoir 10A de la monture 10. Le doigt de palpage 9, du support 9A vers l'extrémité terminale 9B, présente une forme allongée qui s'affine. Ainsi, vu de profil dans le plan XY, l'embout de lecture 9C présente un diamètre supérieur à l'épaisseur de l'extrémité terminale 9B. Cette caractéristique permet d'éviter toute interférence entre l'extrémité terminale 9B et la monture 10, ce qui empêcherait tout contact entre l'embout de lecture 9C et le fond du drageoir 10A de la monture 10.

Avantageusement, comme le montre la figure 5, le doigt de palpage 9 s'étend selon un axe de palpage C présentant un angle de palpage A1 non nul par rapport au plan général K de la monture 10.

Comme le montrent la figure 4A, cet axe de palpage C présente, dans le plan XZ, par rapport à l'axe X, un angle de palpage A1 d'environ 15 degrés dans le sens trigonométrique. Ainsi, la monture 10 des lunettes et le palpeur 8 sont agencés de telle sorte que, lorsque la monture 10 est positionnée dans les moyens de fixation 3,4, le doigt de palpage 9 pointe obliquement vers le cercle de la monture 10 et vers le côté arrière de la monture 10 destiné à être disposé en vis-à-vis des yeux du porteur.

Par ailleurs, comme le montre la figure 4B, l'axe de palpage C présente, dans le plan XY orthogonal à l'axe de rotation B du palpeur 8, par rapport à l'axe d'effort E tangent à la lumière 7, un angle AB d'environ 15 degrés, dans le sens trigonométrique inverse. Ainsi, le doigt de palpage 9 est tourné vers l'extérieur du plateau tournant 6 et vers l'extérieur de l'arc de cercle décrit par la lumière 7 par rapport à sa direction orthoradiale d'axe porteur A.

Le doigt de palpage 9 peut avantageusement être remplacé par un autre doigt de palpage dont l'axe de palpage présente un angle de palpage différent plus adapté à d'autres types de montures.

En variante, le doigt de palpage 9 peut être réalisé en une seule pièce venue de formation avec le reste du palpeur 8. Il peut également être courbé. On définit alors l'axe de palpage C comme l'axe tangent à l'extrémité du doigt de palpage 9.

Lorsqu'une monture 10 est disposée dans l'appareil de lecture de contour 1, on peut définir chaque point de la monture 10 par trois coordonnées spatiales. L'origine du repère correspondant au centre de la face avant du plateau tournant 6, on peut se placer dans un repère cylindrique orthonormal dont le troisième axe correspond à l'axe de rotation B du plateau tournant 6 et définit une altitude Z du point palpé. Un point de la monture est donc repéré par son rayon, sa position angulaire T et son altitude Z.

L'appareil de lecture de contour 1 comporte par ailleurs un dispositif électronique et/ou informatique permettant, d'une part, de piloter les moteurs-codeurs 28,31, et, d'autre part, de récupérer et d'enregistrer les données que lui transmettent ces moteurs-codeurs 28,31.

Dans notre cas d'étude, on s'intéresse tout particulièrement aux montures fortement galbées, c'est-à-dire fortement cambrées par rapport au plan général des cercles de la monture 10. Un exemple d'une telle monture est représenté sur la figure 5.

Le galbe (ou la cambrure) d'une monture peut être quantifié à l'aide d'un angle de galbe J. Cet angle de galbe J correspond à l'angle formé entre le plan général K de la monture 10 et l'axe L défini comme étant l'axe qui passe par deux points opposés du drageoir 10A (typiquement, l'un disposé près de la partie nasale du cercle et l'autre près de la partie temporale du cercle) et qui présente la plus grande inclinaison par rapport au plan général K des cercles de la monture 10.

On entend ici par fortement galbée une monture dont l'angle de galbe J est supérieur à 20 degrés.

Ce type de montures 10 fortement galbées présente généralement aussi un vrillage du drageoir 10A communément appelé « versage ».

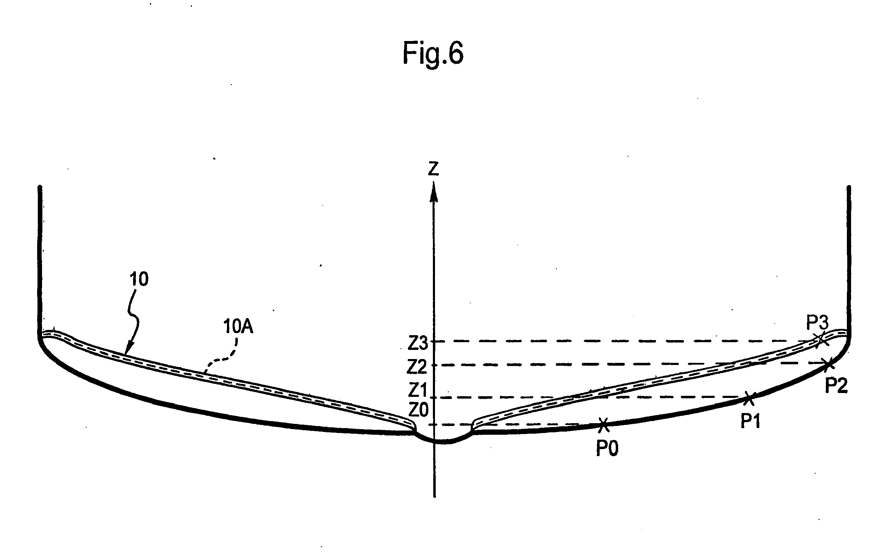

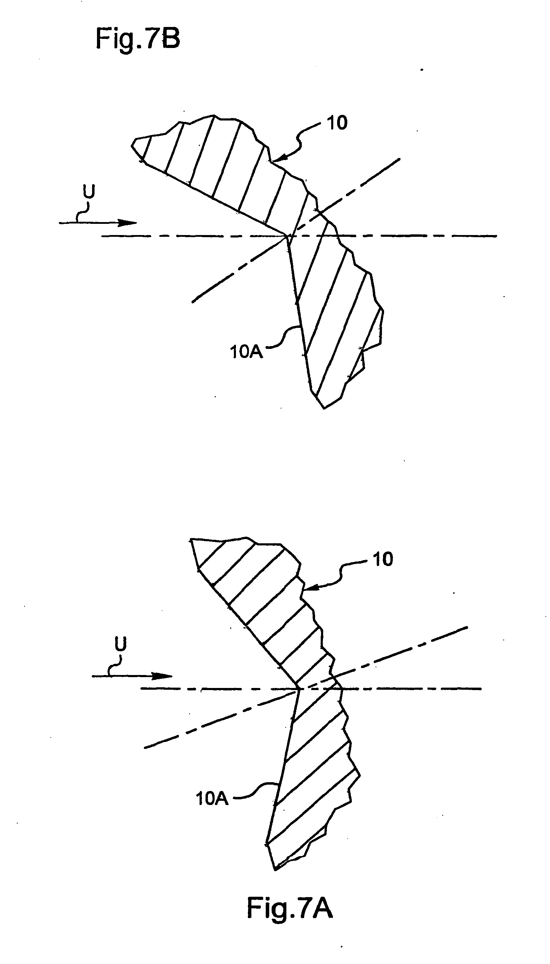

Ainsi, comme le montre la figure 6, on peut considérer que chaque cercle d'une monture 10 possède globalement quatre zones distinctes.
- On distingue tout d'abord une première zone située à proximité du nez du porteur, entre P0 et P1. Cette première zone est peu cambrée et peu «versée».
- On distingue également une deuxième zone située sur la partie basse de la monture, entre P1 et P2. Le long de cette zone, la cambrure et le «versage» de la monture 10 augmentent rapidement. L'importance du « versage » de la monture dans cette zone est plus particulièrement illustrée sur la figure 7A.
- On distingue une troisième zone, entre P2 et P3. Le long de cette zone, la cambrure et le « versage » de la monture atteignent leur valeur maximum puis décroissent. L'importance du « versage » de la monture dans cette zone est plus particulièrement illustrée sur la figure 7B.
- On distingue enfin une quatrième zone, entre P3 et P0. Le long de cette zone, le « versage » et la cambrure du drageoir 10A décroissent fortement.

On notera que chacun des points P0, P1, P2, P3 possède une position selon un axe Z notée respectivement Z0, Z1, Z2, Z3. Ces positions des points selon l'axe Z sont ici appelées altitude. On notera en outre que lorsque la monture 10 est installée dans l'appareil de lecture de contour 1, l'axe Z est parallèle à l'axe de rotation B.

Préalablement au démarrage du palpage, la monture 10 des lunettes est insérée entre les plots 4 des mâchoires 3 de sorte que chacun des cercles de la monture 10 soit prêt à être palpé selon un trajet démarrant par l'insertion du palpeur entre deux plots 4 correspondant à la partie inférieure de la monture 10, puis suivant le drageoir 10A de la monture 10, afin de couvrir toute la circonférence du cercle de la monture 10. A la suite de cette insertion, le dispositif électronique et/ou informatique étalonne le couple de compensation de masse Cz de sorte que le palpeur 8 soit à l'équilibre quelque soit son altitude Z.

En fonctionnement, le palpeur 8 est tout d'abord inséré dans le cercle correspondant à l'oeil droit du porteur. Pour cela, la platine sur laquelle est monté le plateau tournant 6 se déplace à l'aide d'un moteur et d'une liaison crémaillère (non représentés) de telle sorte que le centre du plateau tournant 6 soit disposé entre les deux paires de plots 4 des deux mâchoires 3 fixant le cercle de la monture 10 correspondant à l'oeil droit du porteur.

Le doigt de palpage 9 se place alors automatiquement à une altitude Z0. Cette altitude Z0 est connue et correspond à l'altitude des points situés à mi-hauteur entre les deux plots 4 de fixation de la monture 10. Afin de placer l'embout de lecture 9C à cette altitude Z0, le sous-ensemble de lecture 15 dispose d'un mécanisme embarqué permettant le mouvement du palpeur 8 parallèlement à l'axe A. Ce mécanisme comporte le moteur-codeur 31 qui est adapté à disposer la bague 20, et par conséquent le bras porteur 18, à la hauteur désirée sur l'arbre 17. Le palpeur 8 peut ainsi présenter un mouvement selon l'axe Z.

Le doigt de palpage 9 se déplace alors dans le plan de fixation des montures 10 en direction du point P0 correspondant au point situé entre les deux plots 4 de fixation de la monture 10 sur sa partie basse. Pour cela, un mouvement conjoint de rotation autour de l'axe A est permis au bras de guidage 22 et au bras porteur 18, ce qui permet au bras de guidage 22, entraîné par le moteur 28, d'entraîner lui-même le palpeur 8 en rotation autour de l'axe A, le long de la lumière 7.

Dans cette position initiale, lorsque l'embout de lecture 9C est disposé au point P0, le plateau tournant 6 définit une position angulaire T nulle. Les galets de guidage du plateau tournant 6 sont alors en mesure de faire pivoter le sous-ensemble de lecture 15 par rapport au châssis fixe 5, le sous-ensemble de lecture 15 étant embarqué sur le plateau tournant 6. Le moteur-codeur (non représenté) qui entraîne les galets insérés dans la rainure 14 non seulement provoque la rotation du plateau tournant 6 mais permet aussi au dispositif électronique et/ou informatique de connaître la valeur de la position angulaire T que présente le palpeur 8 par rapport à sa position initiale.

Lorsque le plateau tournant 6 commence à pivoter, la valeur de la position angulaire T du palpeur 8 croît. Le palpeur 8 se déplace le long du fond du drageoir et est guidé en rayon et en altitude Z par ce drageoir 10A. Le palpeur étant inséré dans le cercle de la monture 10 correspondant à l'oeil droit du porteur, le palpeur 8 se déplace dans le sens trigonométrique.

Avantageusement, l'axe de palpage C présentant un angle de palpage A1 non nul par rapport au plan général K de la monture 10, aucune interférence mécanique ne se produit entre le doigt de palpage 9 et le cercle palpé de la monture 10. L'embout de lecture 9C du doigt de palpage 9 reste donc en contact avec le fond du drageoir 10A. En effet, l'axe de palpage C présentant un angle de palpage A1 d'environ 15 degrés par rapport au plan général K de la monture 10, lorsque le drageoir est « versé » d'environ 15 degrés, le doigt de palpage 9 se présente sensiblement orthogonalement au drageoir 10A dans le plan XZ (figure 4A). Par ailleurs, lorsque la monture 10 n'est pas «versée», cet angle de palpage A1 est suffisamment faible pour ne pas provoquer d'interférence mécanique. De la même manière, lorsque le «versage» de la monture 10A est très important, la valeur de cet angle de palpage A1 permet d'éviter toute interférence mécanique.

Le mouvement d'avance du palpeur 8 sur le plateau tournant 6 étant réalisé par une rotation autour de l'axe A, l'angle présenté par l'axe de palpage C du doigt de palpage 9 dans le plan XY (figure 4B) permet de présenter le palpeur 8 de manière sensiblement orthogonale à la tangente du drageoir de la monture au point palpé.

La conservation du contact de l'embout de lecture 9C avec le drageoir 10A est assurée par les moteurs-codeurs 28,31. Ces derniers exercent en effet un effort global constant sur le palpeur 8 qui permet à l'embout de lecture 9C de rester en contact du fond du drageoir 10A. L'effort global exercé correspond à un effort transversal Ft permettant de maintenir le palpeur contre le drageoir 10A et à un effort axial Fa permettant de contrer le poids du palpeur 8 et du bras porteur 18.

Pendant la rotation du plateau tournant 6, le moteur-codeur 31 est donc actif mais il agit aussi en tant que codeur pour repérer les positions successives du bras porteur 18 le long de l'axe A. Ces positions permettent au dispositif électronique et/ou informatique de connaître à tout instant les coordonnées radiales et angulaires de l'embout de lecture 9C par rapport au plateau 6. Connaissant les coordonnées du centre du plateau tournant 6 par rapport au châssis 5, le dispositif électronique et/ou informatique peut alors déterminer les coordonnées radiales et angulaires de l'embout de lecture 9C, dans un repère fixe attaché au châssis 5.

De la même manière, le moteur-codeur 31 exerce lui aussi un couple dit de compensation de masse Cz destiné à annuler artificiellement le poids de l'ensemble formé par le bras porteur 18 et le palpeur 8. Le moteur-codeur 31 fonctionne par ailleurs simultanément en codeur ce qui permet au dispositif électronique et/ou informatique de connaître l'altitude Z de l'embout de lecture 9C du palpeur 8.

Ainsi, l'ensemble des moteurs-codeurs permet, d'une part, au palpeur 8 de palper l'ensemble du drageoir de la monture, et d'autre part, au dispositif électronique et/ou informatique de déterminer les coordonnées spatiales du point palpé par le palpeur 8 et par conséquent les coordonnées spatiales d'un ensemble de points caractérisant le contour du fond du drageoir lorsque le palpeur 8 a palpé avec précision l'ensemble du fond du drageoir 10A.

Le système électronique et informatique pilote donc la position angulaire du palpeur 8 jusqu'à ce qu'elle atteigne 360 degrés. Les galets de guidage du plateau tournant 6 s'arrêtent alors. Le drageoir 10A du cercle correspondant à l'oeil droit du porteur présente alors un contour de forme connue.

Afin de palper le second cercle de la monture, le palpeur 8 descend selon l'axe Z sous la monture 10. La platine se déplace alors transversalement selon l'axe de transfert D afin d'atteindre sa deuxième position dans laquelle le centre du plateau tournant 6 est positionné entre les plots 4 des deux pinces 3 enserrant le cercle correspondant à l'oeil gauche du porteur.

Le palpeur 8 est alors placé automatiquement à la hauteur Z0 à l'intérieur du second cercle de la monture 10 à mesurer, contre le drageoir de ce second cercle, entre les deux plots 4 de fixation de la partie basse de ce cercle de la monture 10.

Le palpage du drageoir est alors réalisé de la même manière que précédemment mais dans le sens trigonométrique inverse.

La présente invention n'est nullement limitée au mode de réalisation décrit et représenté, mais l'homme du métier saura y apporter toute variante conforme à son esprit.

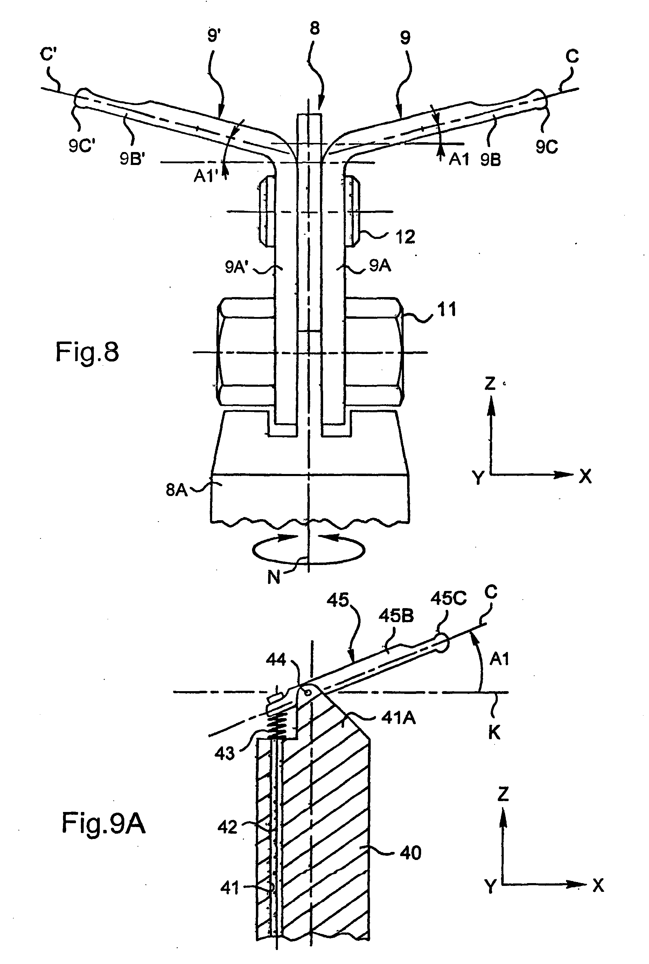

Ainsi, selon une variante de réalisation de l'appareil de lecture de contour 1 représentée sur la figure 8, la tige support 8A peut être munie d'au moins deux palpeurs 9,9' sélectivement activables.

Ici, le palpeur 8 comporte deux doigts de palpage 9,9', un premier doigt de palpage 9 identique à celui précédemment décrit, et un second doigt de palpage 9'. Ce second doigt de palpage 9' comprend également un support 9A' et une extrémité terminale 9B' pourvue d'un embout de lecture 9C'. En revanche, ce second doigt de palpage 9' pointe selon un axe de palpage C' présentant un angle de palpage A1' par rapport au plan général K de la monture 10 différent de l'angle de palpage A1. Cet angle de palpage A1' peut par exemple être égal à 25 degrés. Le second doigt de palpage 9' est ici destiné à palper des montures présentant un angle de galbe J très important.

Dans cette variante de réalisation, l'extrémité haute de la tige support 8A présente deux méplats parallèles au plan YZ. Ces deux méplats sont destinés à accueillir dos-à-dos les supports 9A,9A' des deux doigt de palpage 9,9' si bien que ces derniers pointent selon deux axes C,C' coplanaires.

Avantageusement, les supports 9A et 9A' ne sont pas disposés symétriquement par rapport au plan médian de la tige support 8A. Ils sont en effet décalés verticalement (selon l'axe Z) de telle sorte que les embouts de lecture 9C,9C' de chacun des doigts de palpage 9,9' sont disposés symétriquement par rapport à ce même plan médian.

Par ailleurs, le palpeur 8 présente ici un degré de mobilité supplémentaire. Plus précisément, le palpeur 8 est adapté à pivoter de 180 degrés autour de l'axe N de la tige support 8A au moyen d'un moteur (non représenté) lié à sa partie inférieure.

Un tel dispositif permet par conséquent au palpeur 8, lorsque la monture 10 est très galbée, de s'adapter au galbe de cette monture 10.

La mise en oeuvre de la méthode de palpage est selon cette variante de réalisation sensiblement la même que celle précédemment décrite. Le palpage de chacun des cercles de la monture 10 est réalisé à l'aide du premier doigt de palpage 9. Cependant, lorsque le dispositif électronique et/ou informatique mesure un altitude de drageoir Z4 (par exemple 30 millimètres), la plateau tournant 6 s'arrête. Le palpeur 8 pivote alors de 180 degrés autour de l'axe N de la tige support 8A. Les embouts de lecture 9C,9C' étant symétriques par rapport au plan médian de cette tige support 8A, l'embout de lecture 9C' du second doigt de palpage 9' s'insère dans le drageoir 10A de la monture 10 à la place exacte qu'occupait l'embout de lecture 9C du premier doigt de palpage 9. Le plateau tournant 6 continue alors sa rotation.

Puis, lorsque le dispositif électronique et/ou informatique mesure un altitude de drageoir Z5 (par exemple 29 millimètres), le plateau tournant 6 s'arrête à nouveau et le palpeur 8 pivote de nouveau de 180 degrés autour de l'axe N de la tige support 8A. L'embout de lecture 9C du premier doigt de palpage 9 s'insère alors dans le drageoir 10A de la monture 10 à la place exacte qu'occupait l'embout de lecture 9C' du second doigt de palpage 9'. L'appareil de lecture de contour 1 achève alors la palpage du drageoir 10A avec ce premier doigt de palpage 9.

Selon un deuxième mode de réalisation de l'appareil de lecture de contour 1, la tige support 40 du palpeur est munie d'un doigt de palpage 45 pointant selon l'axe de palpage C avec un angle de palpage A1 par rapport au plan général K de la monture 10 variable en continu pendant la lecture d'un cercle de la monture 10 de lunettes.

Ici, comme le montre la figure 9A, la tige support 40 est percée longitudinalement d'un conduit débouchant 41 décentré par rapport à l'axe de la tige support 40. Par ailleurs, son extrémité haute comporte deux nervures 41A parallèles au plan XZ qui définissent entre elles un espace libre. Ces deux nervures 41A présentent une forme de triangle dont le sommet supérieur est percé d'une ouverture. Les deux ouvertures percées dans les nervures accueillent en force un axe cylindrique 44 qui s'étend selon l'axe Y.

Le doigt de palpage 45 se présent quant à lui sous la forme d'une tige cylindrique portant, à une de ses extrémités un embout de lecture 45C semblable à l'embout de lecture décrit dans le premier mode de réalisation de l'invention. Ce doigt de palpage 45 est en outre percé transversalement d'un alésage engagé sur l'axe cylindrique 44. Le doigt de palpage 45 est ainsi adapté à pivoter dans ledit espace libre autour de l'axe cylindrique 44 de telle sorte que l'axe de palpage C vers lequel pointe le doigt de palpage 45 présente un angle de palpage A1 variable par rapport au plan général K de la monture 10.

Afin de contrôler la valeur de cet angle de palpage A1, un fil métallique 42 est fixé à l'extrémité du doigt de palpage 45 opposée à l'embout de lecture 45C. Ce fil métallique 42 est inséré dans le conduit débouchant 41 de la tige support 40. L'autre extrémité du fil métallique 42 est reliée à une bobine solidaire d'un moteur (non représentés) autour de laquelle il s'enroule. L'enroulement du fil autour de la bobine permet ainsi de diminuer la longueur utile du fil métallique 42, et par conséquent d'augmenter la valeur de l'angle de palpage A1.

Afin de diminuer la valeur de l'angle de palpage A1, la tige support 40 comporte des moyens de rappel du doigt de palpage 45 permettant de le ramener dans une position parallèle au plan général K de la monture 10 lorsque la bobine déroule le fil métallique 42. Ces moyens de rappel comprennent un ressort de compression 43 disposé entre l'extrémité du doigt de palpage 45 à laquelle est attaché le fil métallique 42 et l'extrémité haute de la tige support 40, autour de l'embouchure du conduit débouchant 41. Ainsi, lorsque le moteur déroule la bobine, le ressort de compression 43 exerce un effort vertical sur l'extrémité du doigt de palpage 45, ce qui entraîne la diminution de la valeur de l'angle de palpage A1.

La mise en oeuvre de la méthode de palpage est sensiblement identique à celle décrite dans le premier mode de réalisation de l'invention.

Plus précisément, le doigt de palpage 45 est tout d'abord inséré dans le drageoir 10A du cercle de la monture 10, entre les deux paires de plots 4 des deux mâchoires 3 fixant le cercle de la monture correspondant à l'oeil droit du porteur. Durant cette étape, le moteur lié à la bobine de fil métallique 42 est arrêté de telle sorte que l'angle de palpage A1 est nul. Le plateau tournant 6 commence alors à pivoter de manière à ce que l'embout de lecture 45C du doigt de palpage 45 se déplace au fond du drageoir 10A.

Le système électronique et/ou informatique est alors conçu pour piloter la variation de l'angle de palpage A1 en fonction de l'altitude lue du drageoir 10A. En variante, il pourrait être conçu pour piloter cet angle en fonction de la position angulaire T du plateau tournant 6 ou encore en fonction du rayon lu du point palpé sur le drageoir 10A par rapport au centre du plateau tournant 6.

Quoi qu'il en soit, le système électronique et/ou informatique pilote l'angle de pilotage A1 de sorte qu'il est maximal en zone temporale des cercles de la monture 10 et minimal en zone nasale, quelque soit la plus grande dimension hors tout des cercles de la monture comprise entre 125 et 150 millimètres. On entend par zone temporale la zone de chaque cercle au voisinage du point d'accroche d'une branche de la monture et par zone nasale la zone de chaque cercle au voisinage du point d'accroche du pontet de la monture. La plus grande dimension hors tout de chaque cercle correspond au plus grand diamètre de chaque cercle de la monture.

Ici, lorsque le système électronique et/ou informatique mesure une altitude du drageoir Z inférieure à Z0, le moteur lié à la bobine de fil métallique 42 maintient la bobine en position de telle sorte que l'angle de palpage A1 reste nul. En revanche, lorsqu'il mesure une altitude du drageoir supérieure à Z0, il modifie continûment la valeur de l'angle de palpage selon la formule :
A1 = f (Z - Z0), les altitudes Z et Z0 étant exprimées en millimètres et l'angle de palpage A1 en degrés. Ici, la fonction f pourra par exemple être la « fonction Identité ».

Ici, lorsque le moteur fait pivoter la bobine afin de modifier l'angle de palpage A1, le système électronique et/ou informatique pilote les moteurs-codeurs 28,31 ainsi que la position angulaire du plateau tournant 6 de manière à ce que l'embout de lecture 45C reste en contact avec le point palpé du drageoir 10A. Ce pilotage permet de faire varier l'altitude Z de la tige support 40 ainsi que sa position radiale sur le plateau tournant 6 si bien que le point palpé par l'embout de lecture 45C reste le même malgré la variation de l'angle de palpage A1.

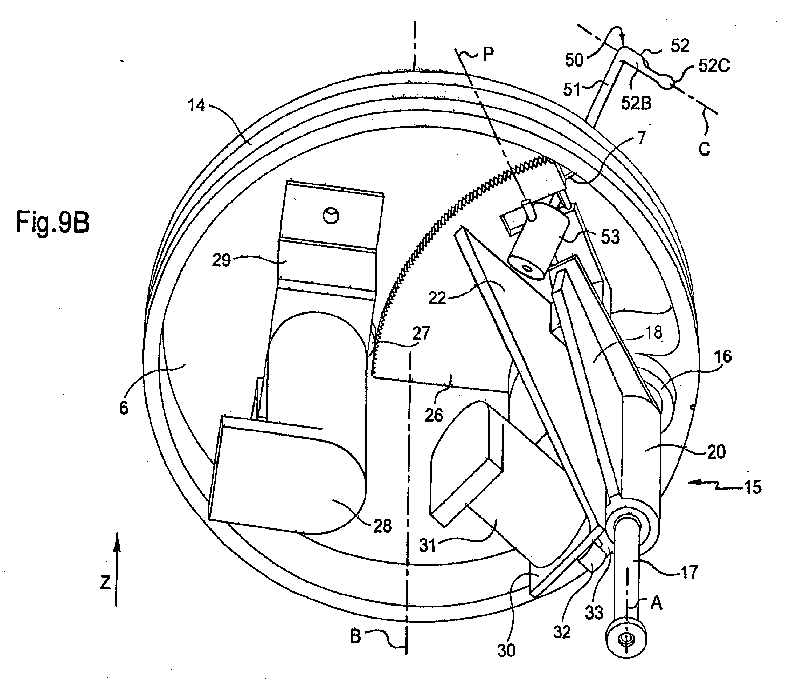

En variante, comme le montre la figure 9B, afin de modifier l'angle de palpage A1 pendant la lecture du drageoir 10A de chaque cercle, le palpeur 50 peut être monté pivotant autour d'un axe P vers lequel pointe le bras porteur 18.

Selon cette variante de réalisation, le palpeur 50 est composé d'une simple tige cylindrique 51 portant un doigt de palpage 52 venu de formation avec elle. Ce doigt de palpage 52 comprend ici également une extrémité terminale 52B à l'extrémité de laquelle est disposé un embout de lecture 52C sensiblement sphérique.

L'appareil de lecture de contour 1 comprend ici encore un bras porteur 18 monté sur l'arbre porteur 17. Le bras porteur 18 comporte à l'une de ses extrémités une bague 20 permettant au bras porteur 18 un mouvement de rotation autour de l'axe porteur A ainsi qu'un mouvement de translation le long de cet axe. À son extrémité opposée à la bague 20, le bras porteur 18 comporte un support cylindrique 53 monté pivotant autour de l'axe P vers lequel pointe ce bras. Ce support cylindrique 53 est entraîné en rotation par un moteur (non représenté) solidaire du bras porteur 18. Ici, le pivotement de la bague 53 par rapport au bras porteur 18 permet de modifier la direction de l'axe de palpage C vers lequel pointe le doigt de palpage 52, et donc l'angle de palpage A1.

La mise en oeuvre de la méthode de palpage est identique à celle précédemment décrite dans ce second mode de réalisation de l'invention.

## Revendications

1. Procédé de lecture de contour d'un drageoir (10A) de cercle d'une monture (10) de lunettes comprenant- :
- une étape de mise en contact contre le fond du drageoir (10A) d'un doigt de palpage (9 ; 9' ; 45 ; 52) appartenant à un palpeur (8) et pointant selon un axe de palpage (C) ou d'une palette de palpage appartenant à un palpeur (8) et s'étendant selon un plan de palpage, et
- une étape de palpage au cours de laquelle le palpeur (8) est déplacé le long du drageoir (10A) pour palper le fond du drageoir (10A) en tournant autour d'un axe de rotation (B),
**caractérisé en ce que** le doigt ou la palette de palpage (9 ; 9' ; 45 ; 52), au moins lorsqu'il ou elle est disposé dans une zone temporale du cercle de la monture (10), pointe obliquement vers le cercle de la monture (10) et vers son côté arrière destiné à être disposé en vis-à-vis des yeux d'un porteur, de sorte que son axe de palpage (C) ou son plan de palpage forme, avec un plan orthogonal à l'axe de rotation (B) du palpeur (8), un angle de palpage (A1) non nul, quelle que soit la plus grande dimension hors-tout de la monture (10).

2. Procédé de lecture de contour selon la revendication précédente, dans lequel, durant l'étape de palpage, le doigt ou la palette de palpage (9 ; 9' ; 45 ; 52), lorsqu'il ou elle est disposé dans une zone nasale du cercle de la monture (10), pointe obliquement soit vers le cercle de la monture (10) et vers son côté arrière, soit vers le cercle de la monture (10) et vers son côté avant avec un angle de palpage (A1) inférieur à 20 degrés.

3. Procédé de lecture de contour selon l'une des revendications précédentes, dans lequel, durant l'étape de palpage, le doigt ou la palette de palpage (9 ; 9' ; 45 ; 52) pointe obliquement vers le cercle de la monture (10) et vers son côté arrière quelque soit l'endroit du cercle où il, ou elle, est disposé.

4. Procédé de lecture de contour selon l'une des revendications précédentes, dans lequel, préalablement à l'étape de mise en contact, il est prévu de positionner la monture (10) de lunettes par rapport à l'axe de rotation (B) indépendamment de sa plus grande dimension hors tout.

5. Procédé de lecture de contour selon l'une des revendications précédentes, dans lequel la plus grande dimension hors tout du cercle de la monture (10) est comprise entre 125 et 150 millimètres.

6. Procédé de lecture de contour selon l'une des revendications précédentes, dans lequel, durant l'étape de palpage, le palpeur (8) réalise une rotation de 360 degrés autour de son axe de rotation (B).

7. Procédé de lecture de contour selon l'une des revendications précédentes, dans lequel, préalablement à l'étape de mise en contact, on procède à une étape de blocage de la monture (10) dans des moyens de maintien (3,4) qui définissent un plan général (K) orthogonal à l'axe de rotation (B) du palpeur (8).

8. Procédé de lecture de contour selon l'une des revendications précédentes, dans lequel, durant l'étape de palpage, le doigt ou la palette de palpage (9 ; 9' ; 45 ; 52), lorsqu'il ou elle est disposé dans la zone temporale du cercle de la monture (10), pointe obliquement vers le cercle de la monture (10) et vers son côté arrière avec un angle de palpage (A1) inférieur ou égal à 40 degrés.

9. Procédé de lecture de contour selon l'une des revendications précédentes, dans lequel, durant l'étape de palpage, le palpeur (8) pointe obliquement au moins une fois vers le cercle de la monture (10) et vers son côté arrière avec un angle de palpage (A1) supérieur ou égal à 5 degrés.

10. Procédé de lecture de contour selon l'une des revendications précédentes, dans lequel l'étape de palpage est réalisée en faisant glisser au fond du drageoir (10A) du cercle de la monture (10) de lunettes un embout de lecture (9C ; 9C' ; 52C) sensiblement sphérique d'une extrémité terminale (9B ; 9B' ; 52B) du doigt de palpage (9 ; 9' ; 52).

11. Procédé de lecture de contour selon la revendication précédente, dans lequel l'extrémité terminale (9B ; 9B' ; 52B) du doigt de palpage (9 ; 9' ; 52') présente une épaisseur inférieure au diamètre de l'embout de lecture (9C ; 9C' ; 52C).

12. Procédé de lecture de contour selon l'une des revendications précédentes, dans lequel l'angle de palpage (A1) est fixe pendant la lecture du cercle de la monture (10).

13. Procédé de lecture de contour selon la revendication précédente, dans lequel l'angle de palpage (A1) est compris entre 10 et 20 degrés, de préférence 15 degrés.

14. Procédé de lecture de contour selon l'une des revendications 12 et 13, dans lequel le doigt de palpage (9) est amovible.

15. Procédé de lecture de contour selon la revendication précédente, dans lequel le palpeur (8) comporte au moins deux doigts de palpage (9) interchangeables présentant, une fois montés, des angles de palpage (A1) différents.

16. Procédé de lecture de contour selon l'une des revendications 12 à 15, dans lequel le palpeur (8) comporte plusieurs doigts de palpage (9,9') sélectivement activables.

17. Procédé de lecture de contour selon l'une des revendications 1 à 11, dans lequel on fait varier l'angle de palpage (A1) pendant l'étape de palpage.

18. Procédé de lecture de contour selon la revendication précédente, dans lequel l'angle de palpage (A1) est maximum lorsque le palpeur (8) palpe la zone temporale du cercle de la monture (10).

19. Procédé de lecture de contour selon l'une des revendications 17 et 18, dans lequel l'angle de palpage (A1) est minimum lorsque le palpeur (8) palpe une zone nasale du cercle de la monture (10).

20. Procédé de lecture de contour selon l'une des revendications 17 à 19, dans lequel, le palpeur (8) comportant plusieurs doigts de palpage (9,9') sélectivement activables, il est prévu d'activer successivement au moins deux doigts de palpage (9, 9') distincts pendant l'étape de palpage.

21. Procédé de lecture de contour selon l'une des revendications 17 à 19, dans lequel il est prévu, pendant l'étape de palpage, de faire varier continûment l'angle de palpage (A1) en fonction de la position spatiale du doigt de palpage (45).

22. Procédé de lecture de contour selon l'une des revendications précédentes, dans lequel, le palpeur (8) étant monté à pivotement autour d'un axe porteur (A) parallèle à l'axe de rotation (B), le doigt ou la palette de palpage (9 ; 9' ; 45 ; 52) pointe vers l'extérieur du cercle décrit par le palpeur (8) en rotation autour de l'axe porteur (A), avec un angle non nul par rapport à sa direction orthoradiale autour de cet axe porteur (A).

23. Procédé de lecture de contour selon la revendication précédente dans lequel le doigt ou la palette de palpage (9 ; 9' ; 45 ; 52) pointe vers l'extérieur du cercle décrit par le palpeur (8) autour de l'axe porteur (A) avec un angle compris entre 10 et 20 degrés, de préférence 15 degrés, par rapport à sa direction orthoradiale autour de cet axe porteur (A).

24. Procédé de lecture de contour selon l'une des revendications précédentes, dans lequel le déplacement du palpeur (8) est effectué par des moyens de motorisation (28, 31) pilotés par des moyens électroniques et/ou informatiques de telle sorte que le doigt de palpage (9 ; 9' ; 45 ; 52) ou la palette de palpage reste constamment au contact du fond du drageoir (10A).

25. Procédé de lecture de contour selon l'une des revendications précédentes, dans lequel la monture (10) de lunettes est fortement galbée et présente, entre son plan général (K) et un axe (L) qui passe par deux points du drageoir (10A) et qui présente la plus grande inclinaison par rapport au plan général (K), un angle de galbe (J) supérieur à 20 degrés.

## Claims

1. A method of reading the outline of a bezel (10A) of a rim of an eyeglass frame (10), the method including :
- a contacting step of putting the bottom of the bezel (10A) into contact with a feeler finger (9; 9'; 45; 52) belonging to a feeler (8) and pointing along a feeler axis (C) or with a feeler blade belonging to a feeler (8) and extending along a feeler plane, and
- a feeling step during which the feeler (8) is moved along the bezel (10A) to feel the bottom of the bezel (10A) while turning about an axis of rotation (B),
the method being **characterized in that** the feeler blade or finger (9; 9'; 45; 52), at least when located in a temple zone of the rim of the frame (10), points obliquely towards the rim of the frame (10) and towards its rear side that is to be placed facing the eyes of a wearer, such that the feeler axis (C) or the feeler plane forms a non-zero feeler angle (A1) with a plane orthogonal to the axis of rotation (B) of the feeler (8) whatever the greatest overall dimension of the frame is.

2. An outline reading method according to the preceding claim, in which, during the feeling step, the feeler blade or finger (9; 9'; 45; 52) when placed in a nose zone of the rim of the frame (10) points obliquely either towards the rim of the frame (10) and towards its rear side, or else towards the rim of the frame (10) and towards its front side with a feeler angle (A1) of less than 20 degrees.

3. An outline reading method according to either preceding claim, in which, during the feeling step, the feeler blade or finger (9; 9'; 45; 52) points obliquely towards the rim of the frame (10) and towards its rear side regardless of the location on the rim at which it is disposed.

4. An outline reading method according to any preceding claim, in which, prior to the contacting step, provision is made for positioning the eyeglass frame (10) relative to the axis of rotation (B) independently of its greatest overall dimension.

5. An outline reading method according to any preceding claim, in which the greatest overall dimension of the rim of the frame (10) lies in the range 125 mm to 150 mm.

6. An outline reading method according to any preceding claim, in which, during the feeling step, the feeler (8) turns through 360 degrees about its axis of rotation (B).

7. An outline reading method according to any preceding claim, in which, prior to the contacting step, a step is performed of blocking the frame (10) in holder means (3, 4) that define a general plane (K) orthogonal to the axis of rotation (B) of the feeler (8).

8. An outline reading method according to any preceding claim, in which, during the feeling step, the feeler blade or finger (9; 9'; 45; 52), when it is placed in the temple zone of the rim of the frame (10), points obliquely towards the rim of the frame (10) and towards its rear side with a feeler angle (A1) that is less than or equal to 40 degrees.

9. An outline reading method according to any preceding claim, in which, during the feeling step, there is at least one occasion on which the feeler (8) points obliquely towards the rim of the frame (10) and towards its rear side with a feeler angle (A1) that is greater than or equal to 5 degrees.

10. An outline reading method according to any preceding claim, in which the feeling step is performed by causing a substantially spherical reader endpiece (9C; 9C'; 52C) at the terminal end (9B; 9B'; 52B) of the feeler finger (9; 9'; 52) to slide along the bottom of the bezel (10A) of the rim of the eyeglass frame (10).

11. An outline reading method according to the preceding claim, in which the terminal end (9B; 9B'; 52B) of the feeler finger (9; 9'; 52) presents thickness that is less than the diameter of the reader endpiece (9C; 9C'; 52C).

12. An outline reading method according to any preceding claim, in which the feeler angle (A1) is not changed while reading the rim of the frame (10).

13. An outline reading method according to the preceding claim, in which the feeler angle (A1) lies in the range 10 degrees to 20 degrees, and is preferably 15 degrees.

14. An outline reading method according to claim 12 or claim 13, in which the feeler finger (9) is removable.

15. An outline reading method according to the preceding claim, in which the feeler (8) has at least two interchangeable feeler fingers (9) that, when mounted, present different feeler angles (A1).

16. An outline reading method according to any one of claims 12 to 15, in which the feeler (8) has a plurality of feeler fingers (9, 9') that can be activated selectively.

17. An outline reading method according to any one of claims 1 to 11, in which the feeler angle (A1) is caused to vary during the feeling step.

18. An outline reading method according to the preceding claim, in which the feeler angle (A1) is at a maximum when the feeler (8) is feeling the temple zone of the rim of the frame (10).

19. An outline reading method according to claim 17 or claim 18, in which the feeler angle (A1) is at a minimum when the feeler (8) is feeling a nose zone of the rim of the frame (10).

20. An outline reading method according to any one of claims 17 to 19, in which, for a feeler (8) having a plurality of feeler fingers (9, 9') that are selectively activatable, provision is made to activate at least two distinct feeler fingers (9, 9') successively during the feeling step.

21. An outline reading method according to any one of claims 17 to 19, in which, during the feeling step, provision is made to cause the feeler angle (A1) to vary continuously as a function of the three-dimensional position of the feeler finger (45).

22. An outline reading method according to any preceding claim, in which, when the feeler (8) is mounted to pivot about a carrier axis (A) parallel to the axis of rotation (B), the feeler blade or finger (9; 9'; 45; 52) points towards the outside of the circle described by the feeler (8) turning about the carrier axis (A) with a non-zero angle relative to its circumferential direction about said carrier axis (A).

23. An outline reading method according to the preceding claim, in which the feeler blade or finger (9; 9'; 45; 52) points towards the outside of the circle described by the feeler (8) about the carrier axis (A) with an angle lying in the range 10 degrees to 20 degrees, and preferably equal to 15 degrees, relative to its circumferential direction about said carrier axis (A).

24. An outline reading method according to any preceding claim, in which the feeler (8) is moved by motor means (28, 31) controlled by electronic and/or computer means in such a manner that the feeler blade or finger (9; 9'; 45; 52) remains continuously in contact with the bottom of the bezel (10A).

25. An outline reading method according to any preceding claim, in which the eyeglass frame (10) is strongly curved and presents, between its general plane (K) and an axis (L) passing through two points of the bezel (10A) and presenting the greatest angle of inclination relative to the general plane (K), an angle of curvature (J) that is greater than 20 degrees.

## Patentansprüche

1. Ableseverfahren für die Kontur einer Rille (10A) einer Brillenfassung (10), welches umfasst:
- einen Schritt der Kontaktherstellung zwischen dem Boden der Rille (10A) und einem zu einem Abtaster (8) gehörenden Abtastfinger (9;9';45,52), der entlang einer Abtastachse (C) gerichtet ist oder einem zu einem Abtaster (8) gehörenden Abtastplatte, der sich entlang einer Abtastebene erstreckt, und
- einen Abtastschritt, während dem der Abtaster (8) entlang der Rille (10A) bewegt wird, um den Boden der Rille (10A) abzutasten, wobei sich der Abtaster dabei um eine Rotationsachse (B) dreht,
**dadurch gekennzeichnet, dass** der Abtastfinger bzw. -platte (9;9';45,52), zumindest wenn er in einer temporalen Zone der Brillenfassung (10) angeordnet ist, derart schräg zur Fassung (10) und zu ihrer Rückseite gerichtet ist, welche dazu bestimmt ist, gegenüber den Augen eines Brillenträgers angeordnet zu werden, dass seine Abtastachse (C) bzw. seine Abtastebene unabhängig von der größten Gesamtdimension der Brillenfassung (10) mit einer zur Rotationsachse (B) des Abtasters (8) orthogonalen Ebene einen Abtastwinkel (A1) ungleich null bildet.

2. Ableseverfahren für Konturen nach dem vorausgehenden Anspruch, bei dem der Abtastfinger bzw. -platte (9;9';45;52) während des Abtastschrittes mit einem Abtastwinkel (A1) von weniger als 20 Grad, wenn er in einer nasalen Zone der Fassung (10) angeordnet ist, entweder zur Fassung (10) und zu ihrer Rückseite schräg gerichtet ist, oder zur Fassung (10) und zu ihrer Vorderseite schräg gerichtet ist.

3. Ableseverfahren für Konturen nach einem der vorausgehenden Ansprüche, bei dem der Abtastfinger bzw. -platte (9;9';45;52) während des Abtastschrittes unabhängig von der Stelle der Fassung, an der er sich befindet, schräg zur Fassung (10) gerichtet ist.

4. Ableseverfahren für Konturen nach einem der vorausgehenden Ansprüche, bei dem vor dem Schritt der Kontaktherstellung vorgesehen ist, die Brillenfassung (10) unabhängig von ihrer größten Gesamtdimension in Bezug zur Rotationsachse (B) zu positionieren.

5. Ableseverfahren für Konturen nach einem der vorausgehenden Ansprüche, bei dem die größte Gesamtdimension der Fassung (10) zwischen 125 und 150 Millimeter beträgt.

6. Ableseverfahren für Konturen nach einem der vorausgehenden Ansprüche, bei dem der Abtaster (8) während des Abtastschrittes eine Drehung von 360 Grad um seine Rotationsachse (B) macht.

7. Ableseverfahren für Konturen nach einem der vorausgehenden Ansprüche, bei dem man die Fassung (10) vor der Kontaktherstellung in Haltemitteln (3,4) blockiert, die eine allgemeine orthogonale Ebene (K) zur Rotationsachse (B) des Abtasters (8) definieren.

8. Ableseverfahren für Konturen nach einem der vorausgehenden Ansprüche, bei dem der Abtastfinger bzw. -platte (9;9';45;52) während des Abtastschrittes mit einem Abtastwinkel (A1) von kleiner gleich 40 Grad zur Fassung (10) und zu ihrer Rückseite schräg gerichtet ist, wenn er in der temporalen Zone der Fassung (10) angeordnet ist.

9. Ableseverfahren für Konturen nach einem der vorausgehenden Ansprüche, bei dem der Abtaster (8) während des Abtastschrittes mindestens einmal mit einem Abtastwinkel (A1) von größer gleich 5 Grad schräg zur Fassung (10) und zu ihrer Rückseite gerichtet ist.

10. Ableseverfahren für Konturen nach einem der vorausgehenden Ansprüche, bei dem der Abtastschritt realisiert wird, indem man einen im Wesentlichen sphärischen Ableseaufsatz (9C;9C';52C) eines Endstückes (9B;9B';52B) des Abtastfingers (9;9';52) am Boden der Rille (10A) der Brillenfassung (10) gleiten lässt.

11. Ableseverfahren für Konturen nach vorausgehendem Anspruch, bei dem das Endstück (9B;9B';52B) des Abtastfingers (9;9';52') eine geringere Stärke als der Durchmesser des Ableseaufsatzes (9C;9C';52C) aufweist.

12. Ableseverfahren für Konturen nach einem der vorausgehenden Ansprüche, bei dem der Abtastwinkel (A1) während dem Ablesen der Brillenfassung (10) fest ist.

13. Ableseverfahren für Konturen nach dem vorausgehenden Anspruch, bei dem der Abtastwinkel (A1) zwischen 10 und 20 Grad liegt, vorzugsweise bei 15 Grad.

14. Ableseverfahren für Konturen nach einem der Ansprüche 12 und 13, bei dem der Abtastfinger (9) abnehmbar ist.

15. Ableseverfahren für Konturen nach vorausgehendem Anspruch, bei dem der Abtaster (8) mindestens zwei auswechselbare Abtastfinger (9) umfasst, die wenn sie montiert sind, unterschiedliche Abtastwinkel (A1) aufweisen.

16. Ableseverfahren für Konturen nach einem der Ansprüche 12 bis 15, bei dem der Abtaster (8) mehrere einzeln aktivierbare Abtastfinger (9;9') umfasst.

17. Ableseverfahren für Konturen nach einem der Ansprüche 1 bis 11, bei dem man den Abtastwinkel (A1) während des Abtastschrittes variieren lässt.

18. Ableseverfahren für Konturen nach vorausgehendem Anspruch, bei dem der Abtastwinkel (A1) maximal ist, wenn der Abtaster (8) die temporale Zone der Brillenfassung (10) abtastet.

19. Ableseverfahren für Konturen nach einem der Ansprüche 17 und 18, bei dem der Abtastwinkel (A1) minimal ist, wenn der Abtaster (8) eine nasale Zone der Brillenfassung (10) abtastet.

20. Ableseverfahren für Konturen nach einem der Ansprüche 17 bis 19, bei dem der Abtaster (8) mehrere einzeln aktivierbare Abtastfinger (9,9') umfasst und vorgesehen ist, während des Abtastschrittes nacheinander mindestens zwei verschiedene Abtastfinger (9,9') zu aktivieren.

21. Ableseverfahren für Konturen nach einem der Ansprüche 17 bis 19, bei dem während des Abtastschrittes vorgesehen ist, den Abtastwinkel (A1) kontinuierlich in Abhängigkeit der räumlichen Position des Abtastfingers (45) variieren zu lassen.

22. Ableseverfahren für Konturen nach einem der vorausgehenden Ansprüche, bei dem der Abtaster (8) schwenkbar um eine zur Rotationsachse (B) parallele Trageachse (A) montiert ist, der Abtastfinger oder -platte (9;9';45;52) zur Außenseite der Fassung gerichtet ist, die von dem sich um die Trageachse (A) drehenden Abtaster (8) beschrieben wird, mit einem Winkel ungleich null in Bezug auf seine orthoradiale Richtung um diese Trageachse (A).

23. Ableseverfahren für Konturen nach dem vorausgehenden Anspruch, bei dem der Abtastfinger oder -platte (9;9';45;52) zur Außenseite der Fassung gerichtet ist, die von dem Abtaster (8) um die Trageachse (A) mit einem Winkel in Bezug auf seine orthoradiale Richtung um diese Trageachse (A) zwischen 10 und 20 Grad, vorzugsweise 15 Grad, beschrieben wird.

24. Ableseverfahren für Konturen nach einem der vorausgehenden Ansprüche, bei dem die Bewegung des Abtasters (8) durch Antriebsmittel (28,31) erfolgt, die von elektronischen und/oder computergestützten Mitteln derart gesteuert werden, dass der Abtastfinger (9;9';45;52) oder der Abtastplatte permanent den Boden der Rille (10A) berührt.

25. Ableseverfahren für Konturen nach einem der vorausgehenden Ansprüche, bei dem die Brillenfassung (10) stark gewölbt ist und zwischen ihrer allgemeinen Ebene (K) und einer Achse (L), die durch zwei Punkte der Rille (10A) verläuft und in Bezug auf die allgemeine Ebene (K) die größte Neigungsachse aufweist, einen Wölbungswinkel (J) von über 20 Grad aufweist.
